(19) **Europäisches Patentamt / European Patent Office / Office européen des brevets**

(11) **EP 1 777 725 B1**

(12) **EUROPEAN PATENT SPECIFICATION**

(45) Date of publication and mention
of the grant of the patent:
**23.09.2009 Bulletin 2009/39**

(51) Int Cl.:
*H01J 29/00* (2006.01)　　*H01J 29/96* (2006.01)
*H01J 31/12* (2006.01)　　*H05K 7/20* (2006.01)
*G09G 3/20* (2006.01)

(21) Application number: **06122256.8**

(22) Date of filing: **13.10.2006**

(54) **Flat panel display device having thermostat**

Flache Plasmaanzeigetafel mit Thermostat

Panneau d'affichage plat comprenant un thermostat

(84) Designated Contracting States:
**DE GB**

(30) Priority: **18.10.2005　KR 20050098332**

(43) Date of publication of application:
**25.04.2007　Bulletin 2007/17**

(73) Proprietor: **Samsung SDI Co., Ltd.**
**Suwon-si**
**Gyeonggi-do (KR)**

(72) Inventor: **Lee, Byong Gon**
**Legal & IP Team**
**Yongin-si**
**Gyeonggi-do (KR)**

(74) Representative: **Hengelhaupt, Jürgen et al**
**Gulde Hengelhaupt Ziebig & Schneider**
**Patentanwälte - Rechtsanwälte**
**Wallstrasse 58/59**
**10179 Berlin (DE)**

(56) References cited:
EP-A1- 0 686 991　　JP-A- 9 082 246
JP-A- 10 232 647　　JP-A- 2002 311 416
US-A- 5 936 354　　US-A1- 2005 110 383

## Description

## BACKGROUND

### 1. Field of the Invention

The present invention relates to a flat panel display device having a thermostat.

### 2. Discussion of Related Art

An electron emission display has a triple electrode structure having a cathode, an anode, and a gate electrode. The cathode electrode serving as a scan electrode is formed on a substrate, an insulator layer having a hole is formed on the cathode electrode, and the gate electrode generally serving as a data electrode is formed on the cathode electrode. Moreover, in the hole, an electron emitter is formed and contacts the cathode electrode.

Such an electron emission display concentrates a high electric field to the emitter to emit electrons due to the quantum mechanical tunnel effect, and the electrons from the emitter are accelerated by voltage applied between the cathode electrode and the anode electrode and collide against an RGB luminescent layer such that a phosphor of the RGB luminescent layer is illuminated to display an image.

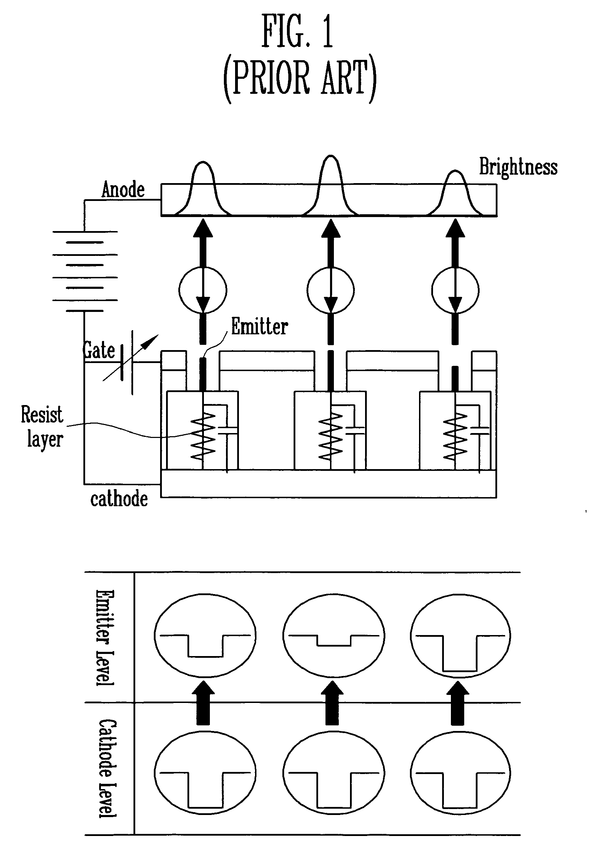

FIG. 1 is a schematic view illustrating the uniformity between the pixels of an electron emission display having a conventional electrical resistance layer. As shown in FIG. 1, the electron emission display having the electrical resistance layer is formed with the electrical resistance layer between the cathode electrode and the electron emission source. The electrical resistance layer serves as a load to cause a voltage drop (V = IR) proportional to the amount of the transported electrons such that the electron scattering between the electron emission sources is reduced to enhance the uniformity between the pixels.

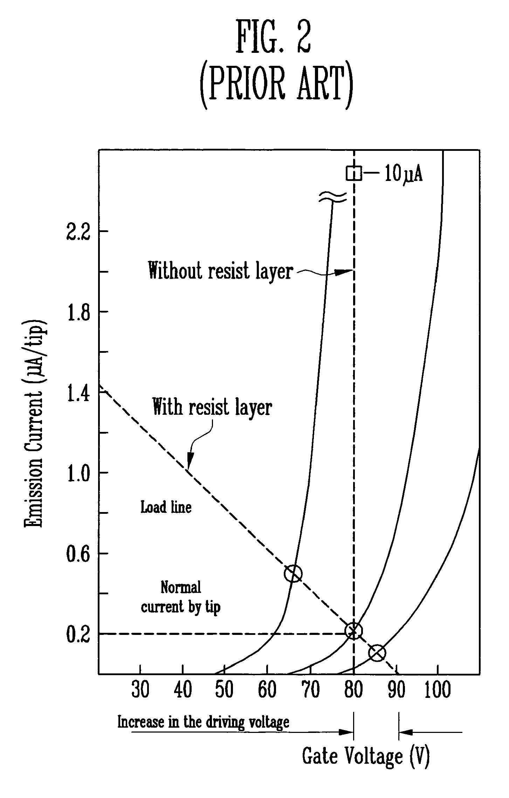

FIG. 2 is a graph illustrating the relationship between voltage and current of the conventional electron emission display according to whether or not an electrical resistance layer exists. As shown in FIG. 2, with the electrical resistance layer, in comparison to the case without the electrical resistance layer, a driving voltage applied to the electron emission device is inevitably increased, and this serves as a factor to transport more charge and discharge currents and to increase the temperature of the electron emission device.

When temperature increases, resistance decreases, causing the voltage to decrease and the electron emission scattering between the electron emission sources to increase.

Thus, the resistance of the electrical resistance layer of the electron emission device cannot be adjusted uniformly and managed steadily during the operation, so that the uniformity between the pixels is affected.

Japanese Patent Application JP 09 082246 A discloses a flat panel display device comprising an electron emission substrate, an image forming substrate, a spacer, a temperature measuring means, a temperature controlling part and a cooler. United States Patent No. 5,936,354 discloses an electrical resistance layer formed between a cathode electrode and an emission source on the electrion emission substrate of a display device. Variation of the resistance of the resistance layer due to temperature variation thereof is corrected by respective variation of the gate voltage.

Japanese Patent Application JP 2002 311416 A discloses the use of temperature sensors in an LCD, and Japanese Patent Application JP 10 232647 A discloses the use of temperature sensors in a PDP.

## SUMMARY

A flat panel display device according to one embodiment of the present invention includes an electron emission substrate; an image forming substrate spaced apart from the electron emission substrate; an electrical resistance layer formed between a cathode electrode and an electron emitter on the electron emission substrate; a spacer disposed between the electron emission substrate and the image forming substrate; temperature measuring means for measuring the temperature of the electron emission substrate; a temperature controlling part for controlling the temperature of the electron emission substrate; and a cooler controlled by the temperature controlling part for cooling the flat panel display device to be at a temperature determined by the temperature controlling part. The temperature measuring means include a measuring device including a measuring line formed in the displaying region on the electron emission substrate concurrently with a cathode line, and a first measuring pad formed on a first side and a second measuring pad formed on a second side of the non-displaying region concurrently with a cathode pad, the measuring pads being connected to respective ends of the measuring line; a power supply connected to the first measuring pad to supply a voltage or current thereto and a detector connected to the second measuring pad to detect the voltage or current supplied from the power source, wherein the temperature controlling part converts the voltage or current detected by the detector into a temperature value and controls the temperature of the electron emission substrate.

In one embodiment, the temperature controlling part includes: a temperature converter for converting the voltage or current detected by the detector into the temperature value; a temperature comparator for comparing the temperature value converted by the temperature converter with a reference temperature; and a temperature controller for controlling the temperature of the electron emission substrate.

The detector may be adapted to detect the voltage or current at opposite ends of the measuring line, and the measuring line and the cathode line are formed in the displaying region.

The flat panel display device may also include a second cathode pad formed on the second side of the non-displaying region, wherein the second measuring pad is formed between the cathode pads. The cooler may include a thermoelectric semiconductor device or cooling fan. In one embodiment, the voltage or current supplied to the first measuring pad is supplied during a sensing time between the application of scanning signals on the cathode line.

A flat panel display device according to another embodiment of the present invention includes an electron emission substrate; an image forming substrate spaced apart from the electron emission substrate; an electrical resistance layer formed between a cathode electrode and an electron emitter on the electron emission substrate; a spacer disposed between the electron emission substrate and the image forming substrate; temperature measuring means for measuring the temperature of the electron emission substrate; a temperature controlling part for controlling the temperature of the electron emission substrate; and a cooler controlled by the temperature controlling part for cooling the flat panel display device to be at a temperature determined by the temperature controlling part. The measuring device includes measuring lines formed in respective corners of the displaying region of the electron emission substrate, and measuring pads connected to ends of the measuring lines in the non-displaying region.

a power supply connected to respective first sides of the measuring pads to supply a voltage or current thereto; and
a detector connected to respective second sides of the measuring pads to detect the voltage or current supplied from the power source.

The temperature controlling part converts the voltage or current detected by the detector into a temperature value and controls the temperature of the electron emission substrate.

A flat panel display device according to yet another embodiment of the present invention includes an electron emission substrate; an image forming substrate spaced apart from the electron emission substrate; a electrical resistance layer formed between a cathode electrode and an electron emitter on the electron emission substrate; a spacer disposed between the electron emission substrate and the image forming substrate; temperature measuring means for measuring the temperature of the electron emission substrate; a temperature controlling part for controlling the temperature of the electron emission substrate; and a cooler controlled by the temperature controlling part for cooling the flat panel display device to be at a temperature determined by the temperature controlling part. The temperature measuring means include a cathode line formed in the displaying region on the electron emission substrate; a first cathode pad formed on a first side and a second cathode pad formed on a second side of a non-displaying region, the cathode pads being connected to respective ends of the cathode line; a power supply connected to the cathode line and the first cathode pad to supply a voltage or current thereto; and a detector connected to the cathode line and the second cathode pad to detect the voltage or current supplied from the power source. The temperature controlling part converts the voltage or current detected by the detector into a temperature value and controls the temperature of the electron emission substrate. The voltage or current supplied to the cathode line may be supplied during a sensing time between the application of scanning signals on the cathode line.

The cooler may include cooling fins.

## BRIEF DESCRIPTION OF THE DRAWINGS

These and/or other preferred features and aspects of the invention will become apparent and more readily appreciated from the following description of examples of embodiments, taken in conjunction with the accompanying drawings of which:

FIG. 1 is a schematic view illustrating the uniformity between pixels of an electron emission display having a conventional electrical resistance layer;
FIG. 2 is a graph illustrating the relationship between voltage and current of the conventional electron emission display according to the presence of an electrical resistance layer;
FIG. 3 is a schematic view illustrating a flat panel display device having a thermostat according to an embodiment of the present invention;
FIGs. 4A and 4B are schematic views illustrating a voltage applied to a measuring device used in an embodiment of the present invention;
FIG. 5 is a view illustrating a measuring interval of one embodiment of a measuring device according to the present invention;
FIG. 6 is a schematic view illustrating a thermoelectric semiconductor of a cooler according to an embodiment of the present invention;
FIG. 7 is a view illustrating a flat panel display device having a thermostat according to another embodiment of the present invention; and
FIG. 8 is a view illustrating a flat panel display device according to yet another embodiment of the present invention.

## DETAILED DESCRIPTION

Hereinafter, a flat panel display device according to examples of embodiments of the present invention will be described with reference to the attached drawings.

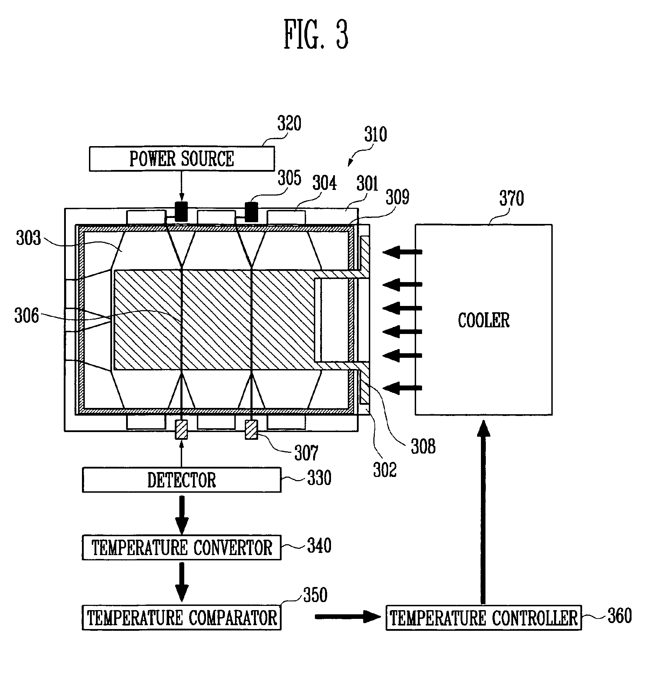

As shown in FIG. 3, the flat panel display device 310 according to an embodiment of the present invention includes an electron emission substrate 301, an image forming substrate 302 spaced apart from the electron emission substrate 301, and a spacer (not shown) disposed therebetween. The flat panel display device 310 also includes a measuring device including a measuring line 306 formed in a displaying region on the electron emission substrate 301 with a cathode line 303. In one embodiment, the measuring line and the cathode line are formed concurrently or simultaneously. Measuring pads 305 and 307 are formed in the upper and lower sides of a non-displaying region with a cathode pad 304. In one embodiment, the measuring pads 305 and 307 are formed concurrently or simultaneously with the cathode pad. A power supply 320 is connected to the measuring pad 305 and is formed in the upper side to supply electric power thereto. A detector 330 is connected to the measuring pad 307 and is formed in the lower side to detect a voltage or current supplied from the power source 320. The flat panel display device also includes a temperature converter 340 for converting a voltage detected by the detector 330 into a temperature value, a temperature comparator 350 for comparing the temperature value input from the temperature converter with a reference temperature, a temperature controller 360 for controlling a temperature of the electron emission substrate based on the temperature value compared by the temperature comparator 350 with the reference temperature, and a cooler 370 for cooling the flat panel display device to be at the temperature controlled by the temperature controller 360.

The flat panel display device 310 includes the electron emission substrate 301 spaced apart from the image forming substrate 302 by a distance, which may be predetermined, and a spacer disposed therebetween. The electron emission substrate 301 of the flat panel display device 310 includes the cathode line 303 having a desired shape, for example, a stripe shape, and formed in a display region on a transparent substrate. The electron emission device includes an electron emitter (not shown) formed at a crossing of the cathode line 303 and the gate line. The cathode line 303 becomes a cathode electrode of the electron emission device and is formed using indium tin oxide (ITO) in one embodiment. At that time, the cathode line 303 and the measuring line 306 of the measuring device are formed concurrently or simultaneously in this embodiment.

Moreover, an electrical resistance layer (not shown) is further formed between the cathode electrode and the electron emitter.

In the non-displaying region of the electron emission substrate 301, the cathode pad 304 is formed to supply signals to the cathode line 303. At that time, in a desired region between the cathode pads 304, the measuring pads 305 and 307 of the measuring device are formed simultaneously.

Additionally, the image forming substrate 302 includes a transparent substrate, the anode electrode 308 formed on the transparent substrate, phosphors (not shown) formed on the anode electrode 308 to emit light due to electrons emitted from the electron emitter, and a light shield layer (not shown) formed between the phosphors.

The flat panel display device 310 further includes a frit 309 for sealing the electron emission substrate 301 and the image forming substrate 302 to maintain a vacuum thereof and for supporting the two substrates.

The measuring device includes the measuring line 306 formed in the displaying region like the cathode line 303, and the measuring pads 305 and 307 formed in the upper and lower sides of the non-displaying region like the cathode pad 304 and between the cathode pads 304. The measuring pads 305 and 307 are connected to respective ends of the measuring line 306.

The power source 320 supplies electric power to the measuring pad 305 connected to the upper end of the measuring line 306. At that time, the power source can operate as a current source or a voltage source to the measuring pad 305.

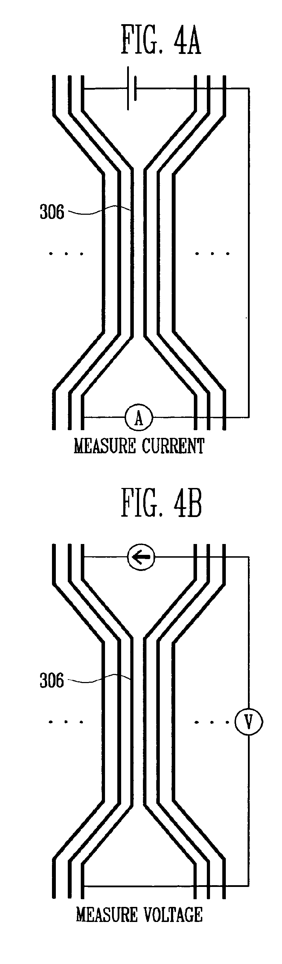

FIGs. 4A and 4B are schematic views illustrating a voltage applied to a measuring device used in one embodiment of the present invention. As shown in FIGs. 3 and 4A, the measuring pad 305 connected to the end of the measuring line 306 of the measuring device measures a current difference between two ends of the measuring pad 307 connected to the opposite end of the measuring line 306 with respect to the voltage source.

As shown in FIGs. 3 and 4B, current is applied to the measuring pad 305 connected to the end of the measuring line 306 of the measuring device such that the measuring pad 307 connected to the opposite end of the measuring line 306 measures the voltage difference between both ends with respect to the current source.

In other words, the current of the measuring device passing through the electron emission substrate 301 can be measured with reference to the voltage source of the power source 320, and the voltage of the measuring device can be measured with reference to the current source.

The detector 330 detects current or voltage between both ends of the measuring line after the current or the voltage supplied from the power source 320 has passed through the measuring device.

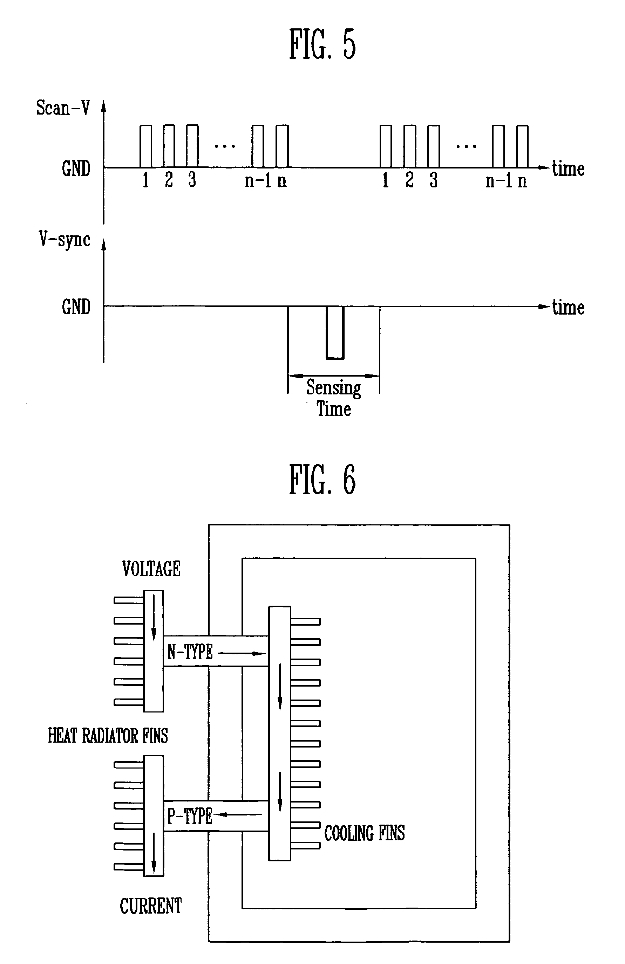

FIG. 5 is a view illustrating a measuring interval of the measuring device according to an embodiment of the present invention. As shown in FIGs. 3 and 5, the measurement of a current difference or a voltage difference between two ends of the measuring device is performed only at a predetermined time. In other words, since the measuring line 306 is formed in the displaying region, the differences are measured to avoid overlap with the time when a scan signal Scan-V is applied by the cathode line 303. Here, since the scan signal Scan-V applied through the cathode line 303 is applied with reference to a synchronizing signal V-sync, the differences are measured at a sensing time of the scan signal Scan-V.

The temperature converter 340 converts the current or the voltage detected by the detector 330 into a temperature value. Here, the detected current or voltage can be obtained from a table presetting the relationship between current or voltage and temperature. Thus, when a certain current or voltage is detected, the temperature converter converts the detected value into a corresponding temperature value.

The temperature comparator 350 determines whether the temperature value converted by the temperature converter 340 corresponds to the reference temperature of the electron emission substrate 301. In other words, it is compared and determined whether or not the temperature value of the electron emission substrate 301 is over the reference temperature.

When the temperature comparator 350 determines that the temperature of the electron emission substrate is increased, the temperature controller 360 outputs a driving signal to decrease the temperature to below the reference temperature so that current is prevented from decreasing due to an increase of resistance of the electrical resistance layer of the electron emission substrate.

The cooler 370 cools the electron emission substrate such that temperature of the electron emission substrate is decreased according to the driving signal output by the temperature controller 360.

The cooler 370 may include cooling fins or a cooling fan installed on the rear side of the electron emission substrate or may include a thermoelectric semiconductor using the Peltier effect and deposited on the rear side of the electron emission substrate.

FIG. 6 is a schematic view illustrating the thermoelectric semiconductor of the cooler according to an embodiment of the present invention. As shown in FIG. 6, the thermoelectric semiconductor may be a P-type or N-type semiconductor. When current is applied from the N-type semiconductor to the P-type semiconductor, the cooling fins on one side are cooled and radiator fins formed on the opposite side emit heat.

Specifically, when current is applied to a closed circuit including a semiconductor connected to two different metals, heat different from Joule's heat is generated or absorbed at the junction. This phenomenon is called to Peltier effect.

The Peltier effect refers to the heat emission or heat absorption occurring when current flows through the junction between two different materials. If heat is generated when current flows in one direction, heat is absorbed when the current flows in the opposite direction. The Peltier effect is reversible. In other words, when current flows in the opposite direction, heat generation and heat absorption reverse. For example, when iron and copper are connected to the ends and current flows therethrough, heat is generated from a junction and heat is absorbed from the exterior of the opposite junction so that ambient temperature decreases.

Heat absorbed and emitted due to the Peltier effect can be expressed by the following formula.

$$|Qp| = \alpha ab \times Tj \times I = \pi \times I$$

Here, $\pi = \alpha ab \times Tj$ is a Pelter coefficient, I is current, $\alpha ab$ is relative thermoelectric power of two metals a and b according to ambient temperature, and $|Qp|$ is an absolute value of heat generated in a unit time.

When the current of the Peltier thermoelectric semiconductor is applied in the opposite direction, the cooling fins serve as a heat radiator pad and the heat radiator fins serve as a cooling pad.

In the embodiment shown in FIG. 3, the temperature of the electron emission substrate is measured and the substrate is cooled to maintain the measured temperature at the reference value so that the resistance of the electron emission substrate can be maintained and the uniformity between the pixels can also be maintained.

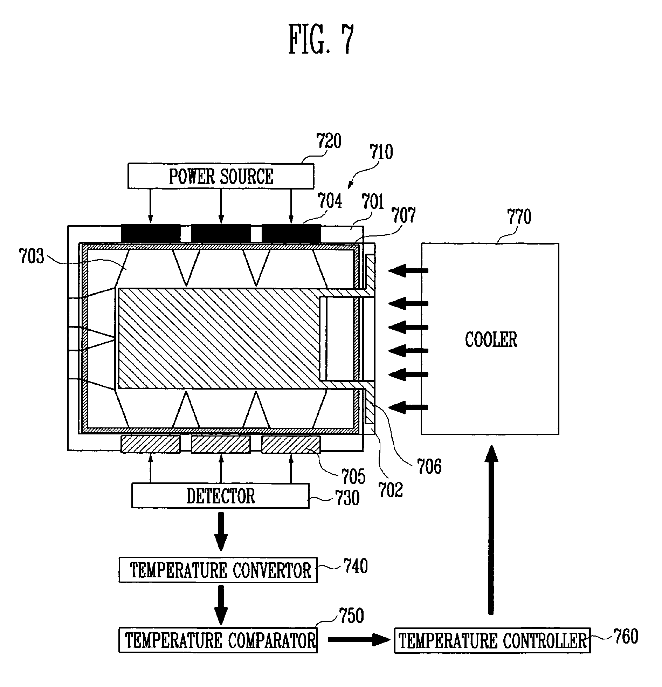

FIG. 7 is a view illustrating a flat panel display device having a thermostat according to another embodiment of the present invention. As shown in FIG. 7, the flat panel display device 710 having a thermostat includes an electron emission substrate 701, an image forming substrate 702 spaced apart from the electron emission substrate 701, and a spacer disposed therebetween. The flat panel display device 710 further includes a cathode line 703 formed in a displaying region serving as a measuring device on the electron emission substrate 701, and cathode pads 704 and 705 formed in the upper and lower sides of a non-displaying region. The flat panel display device also includes a power source 720 connected to the cathode pad 704 formed in the upper side to supply electric power and a detector 730 connected to the cathode pad formed in the lower side to detect electric power supplied from the power source 720. A temperature converter 740 is also included for converting the current or voltage detected by the detector 730 into a temperature value along with a comparator 750 for comparing the temperature value input from the temperature converter 740 with a reference temperature, a temperature controller 760 for controlling the temperature of the electron emission substrate based on the comparison by the temperature comparator 750 with the reference temperature, and a cooler 770 for cooling the electron emission substrate to be at the temperature controlled by the temperature controller 760.

Additional description of elements similar to those discussed above in reference to FIG. 3 will be omitted.

In the embodiment shown in FIG. 7, the cathode pads 704 and 705 and the cathode line 703 can be used without a measuring device so that temperature of all devices in the cathode line in every region can be independently monitored. In other words, temperature of the cathode line can be finely adjusted in every region.

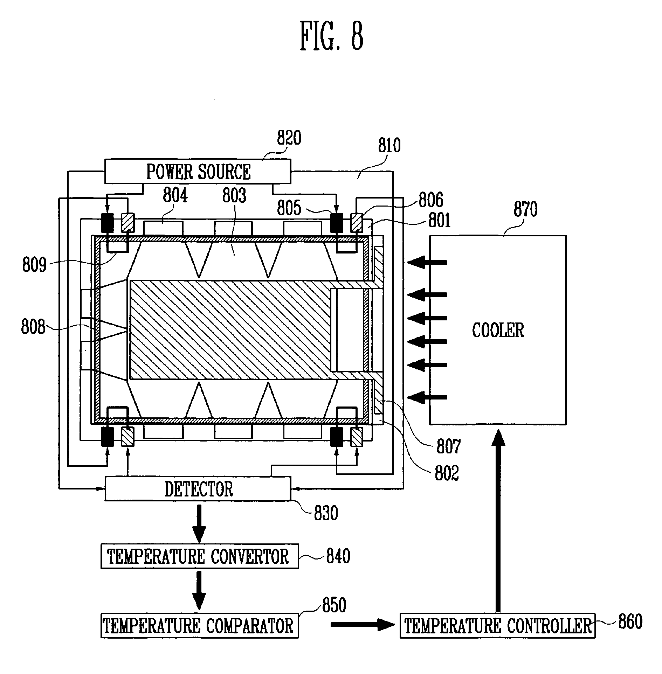

FIG. 8 is a view illustrating a flat panel display device according to yet another embodiment of the present invention. As shown in FIG. 8, the flat panel display device 810 includes an electron emission substrate 801, an image forming substrate 802 spaced apart from the electron emission substrate 801, and a spacer disposed therebetween. The flat panel display device 810 further includes a measuring device having a measuring line 809 formed in every corner of a displaying region of the electron emission substrate 801 and measuring pads 805 and 806 connected to ends of the measuring line 809 in a non-displaying region. The flat panel display device 810 also includes a power source 820 connected to the measuring pad 805 to supply electric power and a detector 830 connected to the opposite end of the measuring pad 806 to detect the voltage or current supplied from the power source 820. Also included in the display are a temperature converter 840 for converting the voltage or current detected by the detector 830 into a temperature value, a comparator 850 for comparing the temperature value input from the temperature converter 840 with a reference temperature, a temperature controller 860 for controlling the temperature of the electron emission substrate based on the comparison by the temperature comparator 850 with the reference temperature, and a cooler 870 for cooling the electron emission substrate to be at the temperature controlled by the temperature controller 860.

Additional description of elements similar to those described above in relation to FIGs. 3 and 7 will be omitted.

This structure allows to easily design the measuring device without changing the design of the displaying region.

**Claims**

1. A flat panel display device (310) comprising:

   an electron emission substrate (301);
   an image forming substrate (302) spaced apart from the electron emission substrate (301);
   an electrical resistance layer formed between a cathode electrode and an electron emitter on the electron emission substrate (301);
   a spacer disposed between the electron emission substrate (301) and the image forming substrate (302);
   temperature measuring means for measuring the temperature of the electron emission substrate (301);
   a temperature controlling part (340/350/360) for controlling the temperature of the electron emission substrate (301); and
   a cooler (370) controlled by the temperature controlling part for cooling the flat panel display device (310) to be at a temperature determined by the temperature controlling part, wherein the temperature measuring means include:
   a measuring device including a measuring line (306) formed in the displaying region on the electron emission substrate (301) concurrently with a cathode line (303), and a first measuring pad (305) formed on a first side and a second measuring pad (307) formed on a second side of the non-displaying region concurrently with a cathode pad (304), the measuring pads (305, 307) being connected to respective ends of the measuring line (306);
   a power supply (320) connected to the first measuring pad (305) to supply a voltage or current thereto and
   a detector (330) connected to the second measuring pad (307) to detect the voltage or current supplied from the power source;
   and wherein the temperature controlling part converts the voltage or current detected by the detector (330) into a temperature value and controls the temperature of the electron emission substrate (301).

2. The flat panel display device (310) as claimed in claim 1, wherein the temperature controlling part comprises:

   a temperature converter (340) for converting the voltage or current detected by the detector (330) into the temperature value;
   a temperature comparator (350) for comparing the temperature value converted by the temperature converter (340) with a reference temperature; and
   a temperature controller (360) for controlling the temperature of the electron emission substrate (301).

3. The flat panel display device (310) as claimed in claim 1 or 2, wherein the detector (330) is adapted to detect the voltage or current at opposite ends of the measuring line (306).

4. The flat panel display device (310) as claimed in one of the preceding claims, wherein the measuring line (306) and the cathode line (303) are formed in the displaying region.

5. The flat panel display device (310) as claimed in one of the preceding claims, further comprising a second cathode pad (304) formed on the second side of the non-displaying region, wherein the second measuring pad (307) is formed between the cathode pads (304).

6. The flat panel display device (310) as claimed in one of the preceding claims, wherein the cooler (370) comprises a thermoelectric semiconductor device or a cooling fan.

7. The flat panel display device (310) as claimed in one of the preceding claims, wherein the voltage or current supplied to the first measuring pad (305) is supplied during a sensing time between the application of scanning signals on the cathode line (303).

8. A flat panel display device (810) comprising:

an electron emission substrate (801);
an image forming substrate (802) spaced apart from the electron emission substrate (801);
an electrical resistance layer formed between a cathode electrode and an electron emitter on the electron emission substrate (801);
a spacer disposed between the electron emission substrate (801) and the image forming substrate (802);
temperature measuring means for measuring the temperature of the electron emission substrate (801);
a temperature controlling part (840/850/860) for controlling the temperature of the electron emission substrate (801); and
a cooler (870) controlled by the temperature controlling part for cooling the flat panel display device (810) to be at a temperature determined by the temperature controlling part,
wherein
the measuring device includes measuring lines (809) formed in respective corners of the displaying region of the electron emission substrate (801), and measuring pads (805, 806) connected to ends of the measuring lines (809) in the non-displaying region;
a power supply (820) connected to respective first sides of the measuring pads to supply a voltage or current thereto; and
a detector (830) connected to respective second sides of the measuring pads to detect the voltage or current supplied from the power source;
and wherein the temperature controlling part converts the voltage or current detected by the detector into a temperature value and controls the temperature of the electron emission substrate.

9. A flat panel display device (710) comprising:

an electron emission substrate (701);
an image forming substrate (702) spaced apart from the electron emission substrate (701);
an electrical resistance layer formed between a cathode electrode and an electron emitter on the electron emission substrate (701);
a spacer disposed between the electron emission substrate (701) and the image forming substrate (702);
temperature measuring means for measuring the a temperature of the electron emission substrate (701);
a temperature controlling part for controlling part (740/750/760) for controlling the temperature of the electron emission substrate (701); and
a cooler (770) controlled by the temperature controlling part for cooling the flat panel display device (710) to be at a temperature determined by the temperature controlling part, wherein
the temperature measuring means include:
a cathode line (703) formed in the displaying region on the electron emission substrate (701);
a first cathode pad (704) formed on a first side and a second cathode pad (704) formed on a second side of the non-displaying region, the cathode pads (704) being connected to respective ends of the cathode line (703);
a power supply (720) connected to the cathode line (703) and the first cathode pad (704) to supply a voltage or current thereto; and
a detector (730) connected to the cathode line (703) and the second cathode pad (704) to detect the voltage or current supplied from the power source (720);
and wherein the temperature controlling part converts the voltage or current detected by the detector (730) into a temperature value and controls the temperature of the electron emission substrate (701).

10. The flat panel display device (710) as claimed in claim 9, wherein the voltage or current supplied to the cathode line (703) is supplied during a sensing time between the application of scanning signals on the cathode line (703).

11. The flat panel display device (710) of one of the preceding claims, wherein the cooler (770) comprises cooling fins.

**Patentansprüche**

1. Flache Plasmaanzeigetafel (310), aufweisend:

ein Elektronenemissionssubstrat (301);
ein bildgebendes Substrat (302), das vom Elektronenemissionssubstrat (301) beabstandet ist;
eine elektrische Widerstandsschicht, die zwischen einer Kathodenelektrode und einem Elektronenemitter auf dem Elektronenemissionssubstrat (301) ausgebildet ist;
einen Abstandshalter, der zwischen dem Elektronenemissionssubstrat (301) und dem bildgebenden Substrat (302) angeordnet ist;
Temperaturmessmittel zum Messen der Temperatur des Elektronenemissionssubstrats (301);
einen Temperatursteuerungsteil (340/350/360) zum Steuern der Temperatur des Elektronenemissionssubstrats (301); und
eine vom Temperatursteuerungsteil gesteuerte Kühlvorrichtung (370), die die flache Plasmaanzeigetafel (310) derart kühlt, dass sie eine vom Temperatursteuerungsteil bestimmte Temperatur aufweist, wobei
die Temperaturmessmittel aufweisen:
eine Messvorrichtung, die eine Messleitung (306), die gleichzeitig mit einer Kathodenleitung (303) im Anzeigebereich auf dem Elektronenemissionssubstrat (301) ausgebildet ist, und ein gleichzeitig mit einem Kathodenpad (304) auf einer ersten Seite des Nicht-Anzeigebereichs ausgebildetes erstes Messpad (305) und auf einer zweiten Seite des Nicht-Anzeigebereichs ausgebildetes zweites Messpad (307) aufweist, wobei die Messpads (305, 307) mit entsprechenden Enden der Messleitung (306) verbunden sind;
eine Energieversorgung (320), die mit dem ersten Messpad (305) zur Versorgung desselben mit einer Spannung oder einem Strom verbunden ist, und
einen mit dem zweiten Messpad (307) verbundenen Detektor (330) zur Erfassung der Spannung oder des Stroms, die/der von der Energiequelle geliefert wird;
und wobei der Temperatursteuerungsteil die/den vom Detektor (330) erfasste/n Spannung oder Strom in einen Temperaturwert umwandelt und die Temperatur des Elektronenemissionssubstrats (301) steuert.

2. Flache Plasmaanzeigetafel (310) nach Anspruch 1, wobei der Temperatursteuerungsteil aufweist:

einen Temperaturwandler (340) zum Umwandeln der/des vom Detektor (330) erfassten Spannung oder Stroms in den Temperaturwert;
eine Temperaturvergleichsvorrichtung (350) zum Vergleichen des vom Temperaturwandler (340) umgewandelten Temperaturwerts mit einer Referenztemperatur; und
eine Temperatursteuerungsvorrichtung (360) zum Steuern der Temperatur des Elektronenemissionssubstrats (301).

3. Flache Plasmaanzeigetafel (310) nach Anspruch 1 oder 2, wobei der Detektor (330) zum Erfassen der Spannung oder des Stroms an einander entgegengesetzten Enden der Messleitung (306) ausgebildet ist.

4. Flache Plasmaanzeigetafel (310) nach einem der vorhergehenden Ansprüche, wobei die Messleitung (306) und die Kathodenleitung (303) im Anzeigebereich ausgebildet sind.

5. Flache Plasmaanzeigetafel (310) nach einem der vorhergehenden Ansprüche, weiterhin aufweisend ein zweites Kathodenpad (304), das auf der zweiten Seite des Nicht-Anzeigebereichs ausgebildet ist, wobei das zweite Messpad (307) zwischen den Kathodenpads (304) ausgebildet ist.

6. Flache Plasmaanzeigetafel (310) nach einem der vorhergehenden Ansprüche, wobei die Kühlvorrichtung (370) eine thermoelektrische Halbleitervorrichtung oder ein Kühlgebläse aufweist.

7. Flache Plasmaanzeigevorrichtung (310) nach einem der vorhergehenden Ansprüche, wobei die Spannung oder der Strom, mit der/dem das erste Messpad (305) versorgt wird, während einer Erfassungszeit zwischen dem Anlegen von Ansteuersignalen auf der Kathodenleitung (303) geliefert wird.

8. Flache Plasmaanzeigetafel (810), aufweisend:

eine Elektronenemissionssubstrat (801);
ein bildgebendes Substrat (802), das vom Elektronenemissionssubstrat (801) beabstandet ist;
eine elektrische Widerstandsschicht, die zwischen einer Kathodenelektrode und einem Elektronemitter auf dem Elektronenemissionssubstrat (801) ausgebildet ist;
einen Abstandshalter, der zwischen dem Elektronenemissionssubstrat (801) und dem bildgebenden Substrat (802) angeordnet ist;
Temperaturmessmittel zum Messen der Temperatur des Elektronenemissionssubstrats (801);
einen Temperatursteuerungsteil (840/850/860) zum Steuern der Temperatur des Elektronenemissionssubstrats (801); und
eine vom Temperatursteuerungsteil gesteuerte Kühlvorrichtung (870), die die flache Plasmaanzeigetafel (810) derart kühlt, dass sie eine vom Temperatursteuerungsteil bestimmte Temperatur aufweist, wobei
die Temperaturmessmittel Messleitungen (809), die in entsprechenden Ecken des Anzeigebereichs des Elektronenemissionssubstrats (801) ausgebildet sind, sowie Messpads (805, 806), die mit Enden der Messleitungen (809) im Nicht-Anzeigebereich verbunden sind, aufweisen;
eine Energieversorgung (820), die mit entsprechenden ersten Seiten der Messpads zur Versorgung derselben mit einer Spannung oder einem Strom verbunden ist; und

einen mit entsprechenden zweiten Seiten der Messpads verbundenen Detektor (830) zum Erfassen der Spannung oder des Stroms, die/der von der Energiequelle geliefert wird; und wobei der Temperatursteuerungsteil die/den vom Detektor erfasste/n Spannung oder Strom in einen Temperaturwert umwandelt und die Temperatur des Elektronenemissionssubstrats steuert.

9. Flache Plasmaanzeigetafel (710), aufweisend:

ein Elektronenemissionssubstrat (701);
ein bildgebendes Substrat (702), das vom Elektronenemissionssubstrat (701) beabstandet ist;
eine elektrische Widerstandsschicht, die zwischen einer Kathodenelektrode und einem Elektronenemitter auf dem Elektronenemissionssubstrat (701) ausgebildet ist;
einen Abstandshalter, der zwischen dem Elektronenemissionssubstrat (701) und dem bildgebenden Substrat (702) angeordnet ist;
Temperaturmessmittel zum Messen der Temperatur des Elektronenemissionssubstrats (701);
einen Temperatursteuerungsteil (740/750/760) zum Steuern der Temperatur des Elektronenemissionssubstrats (701); und
eine vom Temperatursteuerungsteil gesteuerte Kühlvorrichtung (770), die die flache Plasmaanzeigetafel (710) derart kühlt, dass sie eine vom Temperatursteuerungsteil bestimmte Temperatur aufweist, wobei
die Temperaturmessmittel aufweisen:
eine Kathodenleitung (703), die im Anzeigebereich auf dem Elektronenemissionssubstrat (701) ausgebildet ist;
ein auf einer ersten Seite des Nicht-Anzeigebereichs ausgebildetes erstes Kathodenpad (704) und ein auf einer zweiten Seite des Nicht-Anzeigebereichs ausgebildetes zweites Kathodenpad (704), wobei die Kathodenpads (704) mit entsprechenden Enden der Kathodenleitung (703) verbunden sind;
eine Energieversorgung (720), die mit der Kathodenleitung (703) und dem ersten Kathodenpad (704) zur Versorgung derselben mit einer Spannung oder einem Strom verbunden ist; und
einen mit der Kathodenleitung (703) und dem zweiten Kathodenpad (704) verbundenen Detektor (730) zum Erfassen der Spannung oder des Stroms, die/der von der Energiequelle (720) geliefert wird;
und wobei der Temperatursteuerungsteil die/den vom Detektor (730) erfasste/n Spannung oder Strom in einen Temperaturwert umwandelt und die Temperatur des Elektronenemissionssubstrats (701) steuert.

10. Flache Plasmaanzeigetafel (710) nach Anspruch 9, wobei die Spannung oder der Strom, mit der/dem die Kathodenleitung (703) versorgt wird, während einer Erfassungszeit zwischen dem Anlegen von Ansteuersignalen auf der Kathodenleitung (703) geliefert wird.

11. Flache Plasmaanzeigetafel (710) nach einem der vorhergehenden Ansprüche, wobei die Kühlvorrichtung (770) Kühlrippen aufweist.

**Revendications**

1. Panneau d'affichage plat (310) comprenant:

un substrat (301) d'émission d'électrons ;
un substrat (302) de formation d'une image espacé du substrat (301) d'émission d'électrons ;
une couche de résistance électrique formée entre une électrode de cathode et un émetteur d'électrons sur le substrat (301) d'émission d'électrons ;
un espaceur disposé entre le substrat (301) d'émission d'électrons et le substrat (302) de formation d'une image ;
des moyens de mesure de température destinés à mesurer la température du substrat (301) d'émission d'électrons ;
une partie (340/350/360) de commande de température destinée à commander la température du substrat (301) d'émission d'électrons ; et
un dispositif (370) de refroidissement commandé par la partie de commande de température et destiné à refroidir le panneau (310) d'affichage plat de telle manière que celui-ci présente une température déterminée par la partie de commande de température,
les moyens de mesure de température comprenant :
un dispositif de mesure comprenant une ligne (306) de mesure formée dans la région d'affichage sur le substrat (301) d'émission d'électrons, concurremment avec une ligne (303) de cathode, et un premier tampon (305) de mesure formé sur un premier côté de la région de non-affichage et un second tampon (307) de mesure formé sur un second côté de la région de non-affichage, concurremment avec un tampon (304) de cathode, les tampons (305, 307) de mesure étant reliés à des extrémités respectives de la ligne (306) de mesure ;
une alimentation (320) électrique reliée au premier tampon (305) de mesure pour l'alimenter en une tension ou un courant électrique, et
un détecteur (330) relié au second tampon (307) de mesure pour détecter la tension ou le courant amené/e de l'alimentation électrique ;

et la partie de commande de température convertissant la tension ou le courant détecté/e par le détecteur (330) en une valeur de température et commandant la température du substrat (301) d'émission d'électrons.

2. Panneau (310) d'affichage plat selon la revendication 1, dans lequel la partie de commande de température comprend :

un convertisseur (340) de température destiné à convertir la tension ou le courant détecté/e par le détecteur (330) en la valeur de température ; un comparateur (350) de température destiné à comparer la valeur de température convertie par le convertisseur (340) de température avec une température de référence ; et une commande (360) de température destinée à commander la température du substrat (301) d'émission d'électrons.

3. Panneau (310) d'affichage plat selon la revendication 1 ou 2, dans lequel le détecteur (330) est adapté pour détecter la tension ou le courant à des extrémités opposées de la ligne (306) de mesure.

4. Panneau (310) d'affichage plat selon l'une des revendications précédentes, dans lequel la ligne (306) de mesure et la ligne (303) de cathode sont formées dans la région d'affichage.

5. Panneau (310) d'affichage plat selon l'une des revendications précédentes, comprenant en outre un second tampon (304) de cathode formé sur le second côté de la région de non-affichage, le second tampon (307) de mesure étant formé entre les tampons (304) de cathode.

6. Panneau (310) d'affichage plat selon l'une des revendications précédentes, dans lequel le dispositif (370) de refroidissement comprend un dispositif semi-conducteur thermoélectrique ou un ventilateur de refroidissement.

7. Panneau (310) d'affichage plat selon l'une des revendications précédentes, dans lequel la tension ou le courant amené/e au premier tampon (305) de mesure est amené pendant un temps de détection entre l'application de signaux de balayage sur la ligne (303) de cathode.

8. Panneau (810) d'affichage plat, comprenant :

un substrat (801) d'émission d'électrons ; un substrat (802) de formation d'une image espacé du substrat (801) d'émission d'électrons ; une couche de résistance électrique formée entre une électrode de cathode et un émetteur d'électrons sur le substrat (801) d'émission d'électrons ; un espaceur disposé entre le substrat (801) d'émission d'électrons et le substrat (802) de formation d'une image ; des moyens de mesure de température destinés à mesurer la température du substrat (801) d'émission d'électrons ; une partie (840/850/860) de commande de température destinée à commander la température du substrat (801) d'émission d'électrons ; et un dispositif (870) de refroidissement commandé par la partie de commande de température et destiné à refroidir le panneau (810) d'affichage plat de telle manière que celui-ci présente une température déterminée par la partie de commande de température, le dispositif de mesure comprenant des lignes (809) de mesure formées dans des coins respectifs de la région d'affichage du substrat (801) d'émission d'électrons, et des tampons (805, 806) de mesure reliés à des extrémités des lignes (809) de mesure dans la région de non-affichage ; une alimentation (820) électrique reliée à des premiers côtés respectifs des tampons de mesure pour les alimenter en une tension ou en un courant électrique, et un détecteur (830) relié à des seconds côtés respectifs des tampons de mesure pour détecter la tension ou le courant amené/e de l'alimentation électrique ; et la partie de commande de température convertissant la tension ou le courant détecté/e par le détecteur en une valeur de température et commandant la température du substrat d'émission d'électrons.

9. Panneau (710) d'affichage plat, comprenant :

un substrat (701) d'émission d'électrons ; un substrat (702) de formation d'une image espacé du substrat (701) d'émission d'électrons ; une couche de résistance électrique formée entre une électrode de cathode et un émetteur d'électrons sur le substrat (701) d'émission d'électrons ; un espaceur disposé entre le substrat (701) d'émission d'électrons et le substrat (702) de formation d'une image ; des moyens de mesure de température destinés à mesurer la température du substrat (701) d'émission d'électrons ; une partie (740/750/760) de commande de température destinée à commander la température du substrat (701) d'émission d'électrons ; et un dispositif (770) de refroidissement commandé par la partie de commande de température et destiné à refroidir le panneau (710) d'affichage plat de telle manière que celui-ci présente une température déterminée par la partie de commande de température,

les moyens de mesure de température comprenant :

une ligne (703) de cathode formée dans la région d'affichage sur le substrat (701) d'émission d'électrons ;

un premier tampon (704) de cathode formé sur un premier côté de la région de non-affichage, et un second tampon (704) de cathode formé sur un second côté de la région de non-affichage, les tampons (704) de cathode étant reliés à des extrémités respectives de la ligne (703) de cathode ;

une alimentation (720) électrique reliée à la ligne (703) de cathode et au premier tampon (704) de cathode pour les alimenter en une tension ou en un courant électrique ; et

un détecteur (730) relié à la ligne (703) de cathode et au second tampon (704) de cathode pour détecter la tension ou le courant amené/e de l'alimentation (720) électrique ;

et la partie de commande de température convertissant la tension ou le courant détecté/e par le détecteur (730) en une valeur de température et commandant la température du substrat (701) d'émission d'électrons.

10. Panneau (710) d'affichage plat selon la revendication 9, dans lequel la tension ou le courant amené/e à la ligne (703) de cathode est amené/e pendant un temps de détection entre l'application de signaux de balayage sur la ligne (703) de cathode.

11. Panneau (710) d'affichage plat selon l'une des revendications précédentes, dans lequel le dispositif (770) de refroidissement comprend des ailettes de refroidissement.

# FIG. 1
# (PRIOR ART)

# FIG. 2
# (PRIOR ART)

# FIG. 3

320 POWER SOURCE

310

305 304 301 309

303

306

307

302 308

370 COOLER

DETECTOR 330

TEMPERATURE CONVERTOR 340

TEMPERATURE COMPARATOR 350

TEMPERATURE CONTROLLER 360

## FIG. 4A

306

MEASURE CURRENT

## FIG. 4B

306

MEASURE VOLTAGE

# FIG. 5

# FIG. 6

# FIG. 7

POWER SOURCE

COOLER

DETECTOR

TEMPERATURE CONVERTOR

TEMPERATURE COMPARATOR

TEMPERATURE CONTROLLER

EP 1 777 725 B1

FIG. 8

18

**EP 1 777 725 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9082246 A
- US 5936354 A
- JP 2002311416 A
- JP 10232647 A